(19)

**Europäisches Patentamt**

**European Patent Office**

**Office européen des brevets**

(11) **EP 4 279 942 A1**

(12) **EUROPEAN PATENT APPLICATION**

(43) Date of publication:
**22.11.2023  Bulletin 2023/47**

(21) Application number: **22174150.7**

(22) Date of filing: **18.05.2022**

(51) International Patent Classification (IPC):
**G01S 5/02** *(2010.01)*　　　　**G01S 5/06** *(2006.01)*
**G01S 13/76** *(2006.01)*

(52) Cooperative Patent Classification (CPC):
**G01S 5/06; G01S 5/0294; G01S 13/765;**
G01S 2205/09; G01S 2205/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Xco Tech Inc.**
**Penticton, BC V2A 1N2 (CA)**

(72) Inventor: **Derbez, Eric**
**Vancouver, V6H 1B6 (CA)**

(74) Representative: **Brantsandpatents bv**
**Pauline Van Pottelsberghelaan 24**
**9051 Ghent (BE)**

(54) **METHOD FOR ABSOLUTE POSITIONING USING A UWB SIGNAL**

(57)　The invention relates to a subject location system, including a master processing unit, a receiver, and at least one tag associated with the subject. The system includes a hub with a master processing unit and the tag includes transponders. Range differences are smoothed via a Hatch Filter using phase differences. The new observables are used to initialise an Unscented Kalman Filter with an a priori position and the range differences are used to drive the UKF before it is transitioned to using ranges and full phase differences.

Fig. 1

**Description**

**BACKGROUND**

The subject matter disclosed generally relates to determining an accurate location and orientation of objects in three-dimensional space for sport and medical applications. More particularly, the invention relates to increasing the accuracy and precision when calculating the position of a subject in motion.

Many known wireless positioning and tracking systems and methods are limited in usefulness by cost, size of equipment, speed, accuracy, and "noise" in the data.

Historically, some positioning and tracking systems relied on longrange tracking signals such as Global Positioning System (GPS) and related Galileo or GLONASS systems based on the transmission of tracking signals from satellite stations. Such systems are not reliable in sheltered or indoor environments. Other systems utilise short-range positioning and tracking based on existing wireless data communication signal systems such as WiFi, Bluetooth™ and Zigbee™. Such short-range systems are susceptible to degradation from obstacles and have limited range as they are designed primarily for data transmission rather than positioning or tracking.

Position tracking systems based on ultrawideband (UWB) wireless signal transmission have been developed. These systems use the relatively precise time measurement provided by UWB pulse signals and associated receivers to provide positioning and tracking based on measuring time of flight of UWB signals between tracking antennae and a "tag" antenna(e) affixed to an object, animal or person to be tracked. A combination of these methods was refined as Real-Time Kinematic (RTK) for use in kinesiology as disclosed in PCT Publication no. WO2017079839 by McMillan et al.

A preferred embodiment of WO2017079839 taught the use of UWB two-way range data of accuracy better than 3.75 cm (half a wavelength at 4GHz) in order to disambiguate differential phase (which has over an order of magnitude better precision than using range) to recover position. An example of such an RF system is the DW1000 from DecaWave of Dublin Ireland. Current product design has antennae separation of 40 cm.

The previous method required an accurate position to initialize an Unscented Kalman Filter. The present discloses a more general 'point-solver' method using either multilateration or trilateration using Hatch filtered measurements. The tracking system uses 3 or more sensors on a hub to track a plurality of tags.

As stated before, the crux of the problem stems from the fact that the variance of UWB two-way *range* accuracy is about ten times the variance of the *phase* (which is only known modulo the carrier wavelength). It is highly desirable to be able to increase the accuracy of the range differences to correctly and reliably exploit the far more accurate phase difference when reconstructing the full phase difference between sensors (in general this can be more than the carrier wavelength).

**SUMMARY OF THE INVENTION**

According to embodiments of the invention, there is provided a subject location system, having a master processing unit (MPU) and receiver; sensors associated with the master processing unit housed in a hub; and a tag associated with the subject; the tag having a transponder capable of receiving and sending both a tag-specific range signal and a tag-specific phase signal to a corresponding sensor in the master processing unit (MPU); and wherein the master processing unit chooses pairs of ranges and differences of those ranges and then smooths these delta-ranges using a Hatch filter. Ron Hatch invented this filter to smooth the GPS code using the carrier phase. In the present, we adapt to the Hatch filter to smooth the range differences between two sensor pairs using the phase differences between these same pairs.

After the Hatch filter has converged, the combination of the ranges and delta-ranges is then fed into a hybrid point-solver positioning engine to initialize a UKF using range and delta-range observables with appropriately lower covariances on the delta-range observables.

When the UKF state covariances decrease to a predetermined level, the UKF is then transitioned into range and delta-phase navigation, and the covariances of the corresponding observables are adjusted accordingly.

In embodiments of the invention, the likelihood of correctly reconstituting the delta-ranges using the phases is dramatically increased given that the standard deviation of the error on the delta-ranges smoothed by the Hatch filter is decreased by a factor of 3.

In the foregoing, the term delta and single-difference are used interchangeably when talking about delta phase, i.e. single phase difference between pairs of sensors, and delta range, i.e. single range difference. It is also understood that a 'range' observable may be a 1 or 2-way range.

**BRIEF DESCRIPTION OF THE DRAWINGS**

Further features and advantages of the present disclosure will become apparent from the following detailed description, taken in combination with the appended drawings, in which:

Fig. 1 illustrates the communication flow from the tags $T_1$, $T_2$, ..., $T_m$ to sensors $S_1$, $S_2$, ..., $S_n$ onboard the hub according to one embodiment of the invention;

Fig. 2 is a zoom out of the circular track relative to the hub at the centre bottom. Being left of the hub makes the positioning more challenging.

Fig. 3 is a simulation depicting the tracking of a tag moving in a circle radius 3 centre (-4, 10) where the perfect circle (blue) is the truth, and the more erratic circle (red) is the point solver via **trilateration** using the Hatch filter shadowing the UKF in case it needs to restart the UKF.

Fig. 4 is a simulation depicting the tracking of a tag moving in a circle radius 3 centre (-4, 10) where the perfect circle (blue) is the truth, and the more erratic circle (red) is the point solver via **multilateration** using the Hatch filter shadowing the UKF in case it needs to restart the UKF.

Fig. 5 is a simulation depicting the tracking of tag moving in the same circle of radius 3 and centre (-4, 10) but without the Hatch filter; the perfect circle (blue) is the true track, the more erratic circle (green) is the UKF in delta-phase and range mode and the more erratic circle (red) is the point-solver via trilateration (with **no** Hatch filtering).

Fig. 6 is a simulation depicting the tracking of a tag moving in the same circle of radius 3 and centre (-4, 10) showing the UKF filter using range and **delta-range** with the Hatch filter (*not delta-phase*) as the more erratic circle (green) and the true track as the perfect circle (blue).

Fig. 7 is a simulation depicting the tracking of a tag moving in the same circle of radius 3 and centre (-4, 10) showing the UKF filter using range and delta-range **without** the Hatch filter as the more erratic circle (green) and the true track as the perfect circle (blue).

Fig. 8 is a simulation depicting for context the tracking of a tag moving in the same circle of radius 3 and centre (-4, 10) showing the UKF filter using range and delta-phase as the more erratic circle (green) and the true track as the perfect circle (blue).

Fig. 9 depicts the timing diagram for an Asymmetric Double-Sided Two-Way Ranging session.

## DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention. As used herein, the following terms have the following meanings:

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far as such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g., component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, although this may be the case. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The recitation of numerical ranges by endpoints includes all numbers and fractions subsumed within that range, as well as the recited endpoints.

The following terms are defined below:

"Code Division Multiple Access" (CDMA) is a multiple channel access method used by radio communication technologies. In which different transmitters can send information simultaneously over one communication channel.

"Frequency Division Multiple Access" (FDMA) gives users an individual allocation of two or more frequency channels.

"LAMBDA method" is a numeric method to resolve integer ambiguities for GNSS first published by Teunissen, P.J.G., Least-squares estimation of the integer GPS ambiguities. IAG General Meeting, Beijing, China, 1993.

"Time Division Multiple Access" (TDMA) is a channel access method for shared-medium networks. It allows several parties to share a frequency channel by parsing the signal into different time slots.

"Unscented Kalman Filter" (UKF) is a recursive algorithm for calculating the state (e.g., position, velocity, acceleration) of a non-linear dynamic system from noisy sensor measurements, where the state is only partially observable by the sensors. The estimated state information is updated by combining sensor measurements with the predicted state of the system. Predictions of state are made using the past state and a dynamical system model.

"Ultra-wideband" (UWB) is a radio technology for transmitting information in short pulses using a wide bandwidth (>500 MHz).

"RMS" refers to the Root Mean Square error

"Real Time Kinematic" (RTK) carrier phase mode of GPS navigation positioning is a satellite navigation technique used to enhance position data derived from Global Navigation Satellite Systems. It uses measurements of the phase of the signal's carrier wave in addition to the information content of the signal and relies on a single reference station or interpolated virtual station to provide real-time corrections over some wired or wireless link.

"Radio Frequency" (RF) is a band of frequencies for electromagnetic waves, typically in the range of 3 KHz to 300 GHz for use in telecommunications.

"Range" may be a one-way range, that is the distance from the tag's antenna phase centre to the hub transceiver's antenna phase centre. Depending on the context, it could also be a two-way range, that is, the sum of the distance from the transmitting hub transceiver to the tag plus the distance from the tag to the receiving hub transceiver (relative to their antenna phase centres).

"Inertial Measurement Unit" (IMU), as used herein, is intended to mean an instrument that contains one accelerometer, gyro, and (optionally) magnetometer per independent axis, and relays this information to the MPU.

A "receiver", as used herein, includes an antenna and is intended to mean a device that converts incoming electromagnetic signals into electrical signals.

"Master Processing Unit" (MPU) is intended to mean a stationary or base receiver, CPU, associated motherboard, and power supply capable of combining the tag-specific range signal and tag-specific phase signal measurements as received by each the hub's sensors by processing them through an UKF to determine an accurate location for each tag. The subject location system CPU is programmed to process the positional data it receives, according to embodiments of the invention, to result in more accurate position determination. In embodiments, the MPU (and sensors) is stationary relative to the tags. In embodiments of the invention, the MPU is situated in the hub.

A "hub", according to embodiments of the invention, is intended to mean a system of an MPU as well as associated sensors whose orientation and separation are accurately known.

An "observable" herein is understood to be a physical quantity measured by a sensor (see below), in our case range or phase; it could also be an acceleration component, rotation rate on an axis, or a magnetic field strength on an axis in the case of an IMU.

"OTDOA" Observed Time Difference of Arrival positioning method based on multilateration used in LTE cell tower equipment.

A "sensor", as used herein, is an electromagnetic transceiver capable of determining time-of-flight via correlation against a predetermined ranging code and able to extract carrier phase information; it could also be an IMU.

A "transponder", as used herein, is an RF device capable of detecting a given signal and reacting to it by responding with another signal.

A "tag", as used herein, is a self-powered device containing a transponder, an antenna capable of receiving/transmitting both a tag-specific range signal and a tag-specific phase signal. The tag according to embodiments generally has a small, portable size, and can be affixed to a subject whose dynamic position is being observed. The subject location system CPU is programmed to process the positional data it receives, according to embodiments of the invention, to result in a more accurate position determination.

The subject, as described in the present application, is intended to mean an object, person, or animal whose dynamic position is desired to be known. In preferred embodiments of the invention, the subject is mobile. In other embodiments, the subject is an unmanned autonomous vehicle or drone.

In embodiments of the invention, one or more tags are affixed to a subject. In other embodiments of the invention, in the absence of a signal from one or more tags, the master processing unit continues to compute location using the signals from the remaining operable tags.

As discussed herein, Dynamic Position is used to describe a subject's position, velocity, acceleration relative to the hub frame of reference.

Wan, Eric et al. disclose the Unscented Kalman Filter for Nonlinear Estimation in their published academic thesis, Oregon Graduate Institute of Science & Technology. (Wan and Van Der Merwe, 4 Oct. 2000). The UKF location system performs in a superior fashion in dynamic situations, using the single difference phase information. The dynamic position of a subject may be determined in part by direct measurement or detection of location and orientation, as well as continued observation. However, to quantify and remotely observe and record dynamic position, different types of data available about the subject's position and velocity and direction must be integrated. The problem is overcome by creating and re-using a UKF structure which, in embodiments of the present invention, will switch-over (hand-over) from using delta-range measurements to delta-phase measurements, while simultaneously changing measurement covariances.

This approach is unlike the brute force approach used in the LAMBDA method, as it does not directly solve for the integer ambiguities. It has the advantage of imposing the same computational load when using single difference ranges or single difference phases and keeping the processing essentially the same.

The purpose of the embodiments of the invention is to reduce the position error to within one wavelength before switching to single difference phase measurements and handle integer cycle slips on a real-time basis.

In a first aspect, the invention relates to a method for determining the location of a tag comprising a tag antenna, relative to a plurality of sensors comprising a sensor antenna, said sensors being spaced apart from each other, comprising the steps of:

> a. Receiving at sensors of at least one pair of sensors of the plurality of sensors an ultrawideband (UWB) (tag-specific range signal and a tag-specific phase) signal from the tag antenna;
> b. Determining a time of arrival (ToA) and phase from the UWB signal for the sensors of said pair of sensors;
> c. Calculating a differential time of arrival (differential ToA) and a differential phase of said pair of sensors, from the determined ToA and phase of the sensors of said pair of sensors;
> d. Smoothing out the calculated differential ToA of the pair of sensors by means of a Hatch filter using the differential phase of said pair of sensors;
> e. Upon convergence of the Hatch filter, determining a location of the tag antenna relative to the sensors of said pair of sensors, using the smoothed calculated differential ToA.

The overall advantages of the present invention lie in the substantial increase in speed of determining the location of a tag while at the same time enabling very high accuracy, making the present methodology and associated system much more attractive for sport and medical applications than what is known in the state of the art.

Preferably, the UWB signal that is received at the sensors comprises a tag-specific range signal and a tag-specific phase signal. These signals are in response to a transmitted signal from an interrogating sensor (on the 'hub'), that is sent to the tag, which responds to the sensor(s). This way, the receiving sensors receive two-way range information (from interrogating sensor to tag and back to receiving sensor), and phase information from tag to receiving sensor.

Preferably at least one pair of sensors is used in the system and methodology, allowing it to function with a hub or base station that only comprises two sensors. However, in order to maximize functionality and accuracy, as well as enabling some more complex geometries of the area of interest, it is preferred to work with at least 3 or even 4 separate non-colinear sensors. Three sensors allow the method to potentially work with 3 separate pairs, four sensors allow for 6 separate pairs.

In a preferred embodiment, steps a., b. and c. are furthermore performed for sensors of at least a second pair of the plurality of sensors, wherein the sensors of said pair of sensors and the sensors of said second pair of sensors are non-collinear, and wherein steps d. and e. are performed for one pair of said pair and said at least a second pair of sensors for which the differential phase and the differential ToA of said one pair exhibit a superior Position Dilution Of Precision (PDOP) and/or a superior Geometric Dilution Of Position (GDOP).

A particular disadvantage prior art systems and methods encounter, is that under certain orientations/positions of the receiving sensors and the tag, small errors in measurements can become much more pronounced with respect to the resulting calculated location/orientation. While some of this is also mitigated by the configuration of the sensors (on the hub) in the present invention, it is further augmented by having substeps performed by multiple pairs of sensors, and then determining the dilution of position/precision for each pair, to then determine the most reliable one for the further steps. As the first steps are not very taxing in terms of processing power, this can be performed in parallel for a number of pairs without risking delays. The more challenging steps in terms of processing power are then only performed for the reliable results from the 'easy' steps. As mentioned, this can be done for two pairs, but is preferably done for each available pairing of sensors that can be made (i.e., 3 pairs for 3 sensors, 6 pairs for 4 sensors, etc.).

In a preferred embodiment, the location is determined by means of a Kalman filter, preferably an unscented Kalman filter (UKF).

In a preferred embodiment, the tag is positioned within a radius of at most 120 m from the sensors, preferably at most 100 m and more preferably at most 80 m. Most preferably, the distance between tag and sensors is limited to even smaller distances, such as 75 m, 70 m, 65 m, 60 m, 55 m, 50 m, 45 m, 40 m, 35 m, 30 m, 25 m, 20 m, 15 m, 10 m or even at most 5 m. These lower ranges are specifically advantageous as practically none of the known systems are able to provide for the desired accuracy required at such range, at a high enough speed, without strenuous hardware demands which result in a much higher cost and/or are unwieldy in terms of sensors and/or tag. Preferably, the tag is positioned within a radius of at least 0.1 m, preferably at least 0.25 m, more preferably at least 0.5 m, and most preferably at least 1.0 m away from the sensors.

In a preferred embodiment, the UWB signal is transmitted with a centre frequency between 3.5 GHz and 9.5 GHz, preferably between 3.75 GHz and 7.5 GHz, and most preferably either between 4.0 GHz and 5.0 GHz or between 6.0 GHz and 7.0 GHz. Most preferably, the used frequency is centred either around 4.5 GHz or around 6.5 GHz.

In a preferred embodiment, the Hatch filter is deemed to converge after at most 200 cycles, preferably at most 150 cycles, more preferably at most 100 cycles, even more preferably at most 75 cycles or even 50 cycles, such as 45 cycles, 40 cycles, 35 cycles, 30 cycles, 25 cycles, etc.

In a preferred embodiment, the location of the object, by determination of the location of the tag on the object, is determined via multilateration and/or via trilateration.

In a preferred embodiment, steps a., b. and c. are furthermore performed for sensors of at least a second pair of the plurality of sensors, wherein the sensors of said pair of sensors and the sensors of said second pair of sensors are non-collinear, and wherein steps d. and e. are performed for one pair of said pair and said at least a second pair of sensors for which the differential phase has the lowest standard deviation, thereby eliminating or reducing effect of multipath artefacts in measurements. Again, by running preliminary analyses on the intermediate results of steps a. to c., the more processor-heavy steps d. and e. can be reserved for the most favourable outcomes of the sensor pairings. As before, this is preferably performed for each available sensor pairing, with only the most optimal result proceeding to steps d. and e.

In a second aspect, the invention relates to an ultrawideband (UWB) localization system for an object, comprising:

- a hub comprising a master processing unit (MPU), a receiver and at least two, preferably more, sensors, said sensors associated with the master processing unit;
- a tag associated with the object;

The tag comprises an ultrawideband (UWB) component capable of sending an UWB signal; wherein the sensors are capable of receiving the UWB signal, and wherein the MPU determines a range and a phase from said received UWB signal for the sensor that received the UWB signal; wherein the MPU calculates a differential range for a pair of the sensors based on the determined ranges for the sensors in said pair of the sensors. The MPU is configured for smoothing out the calculated differential range for the pair of the sensors by means of a Hatch filter using differential phase for the pair of the sensors, said differential phase being based on the determined phase for the sensors in said pair of the sensors.

The above system is in particular configured for enacting the methodology described in the first aspect of the invention.

The hub preferably comprises a footing and a spacer for holding the separate sensors spatially separated from each other over a distance sufficient to use the differential signals to establish the location of the tag. The footing can potentially be replaced or complimented by a mounting element with which the hub can be attached to another surface or predefined complimentary element. Preferably, the sensors are distanced from each other to form a regular polygon, such as a triangle, square, pentagon, hexagon, etc. This way, it is ensured any three sensors are non-colinear, and each sensor pairing is spaced apart over a minimal distance that allows reliable signal processing. Preferably, a triangular or square configuration is preferred as this provided sufficient sensors in the configuration to provide for redundancies, while keeping the hub compact enough. A triangular version is most preferred, as this guarantees that two out of three pairings of the sensors are spaced apart vertically as well as horizontally (with the hub in upstanding position).

In a preferred embodiment, the hub comprises at least 3 sensors, said sensors being positioned non-collinearly.

In a preferred embodiment, the UWB component comprises a transponder capable of receiving UWB signals.

In a preferred embodiment, a specific sensor of the sensors on the hub is designated as the interrogating sensor, which sends out an interrogating UWB signal to the tag(s).

In the preferred embodiment, the sensors are spaced anywhere from 20 to 150 cm apart (for portability purposes), in either a linear (2 sensor model), tri-spoke (3 equally spaced sensor model), or cross (4 equally spaced sensor model) disposition.

In a preferred embodiment, the sensors are mutually spaced apart between 20 cm and 150 cm, preferably between 25 cm and 100 cm, more preferably between 27.5 cm and 90 cm, even more preferably between 30 cm and 80 cm, even more preferably between 32.5 and 70 cm, even more preferably between 35 cm and 60 cm, even more preferably between 37.5 and 50 cm, and most preferably about 40 cm from each other. For UWB signals, the above distances allow for highly qualitative location determination, while keeping the entire system compact enough for every-day use.

In a preferred embodiment, the sensors are driven by at least one shared oscillator. Preferably, a single shared oscillator is used, although in some embodiments, the system comprises a back-up oscillator.

In a further aspect, the invention relates to the use of the methodology of the first aspect of the invention, for tracking a position of one or more athletes wearing a tag during sport exercises.

In a further aspect, the invention relates to the use of the system of the second aspect of the invention, for tracking a position of one or more athletes wearing a tag during sport exercises.

Preferably, both the methodology of the first aspect and the system of the second aspect of the invention are used for said tracking.

In another aspect, the invention relates to the use of the methodology of the first aspect of the invention, for tracking a position of one or more elderly, injured or otherwise indisposed persons wearing a tag during exercises, for instance rehabilitation, monitoring, testing, etc.

In a further aspect, the invention relates to the use of the system of the second aspect of the invention, for tracking a position of one or more elderly, injured or otherwise indisposed persons wearing a tag during exercises, for instance rehabilitation, monitoring, testing, etc.

Preferably, both the methodology of the first aspect and the system of the second aspect of the invention are used for said tracking.

In embodiments of the invention, the tag may also contain an IMU platform. In embodiments of the invention, the gain pattern of the antenna is application-dependent (preferably hemispherical).

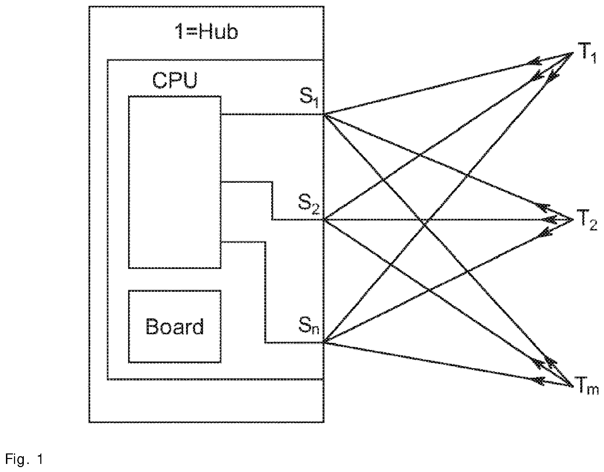

The processes described in subsequent paragraphs are written into the software processes of a hub including CPU and Board (see Figure 1). The hub has installed sensors $S_1$, $S_2$, ..., $S_n$ all synced to the same oscillator. These sensors receive signals from mobile tags $T_1$, $T_2$, ..., $T_m$, and use these signals to compute relative distances between these tags and sensors $S_1$, $S_2$, ..., $S_n$ onboard the hub. The tags listen on different time slots with a certain guard-band allowing for a 100+m range. If we assume (without loss of generality) there is a single tag T, the operation typically assumes $S_1$ is the anchor. The range $R_1$ is the two-way range from $S_1$ to $T_1$; for $i \neq 1$, the two-way range $R_i$ spans the distance from $S_1$ to T to $S_i$. In different implementations, a different anchor could be dynamically chosen depending on line-of-sight conditions.

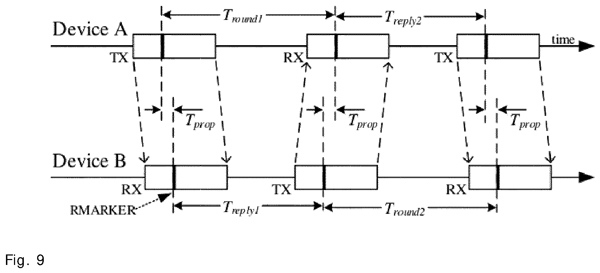

Incidentally, DecaWave has also disclosed a means of producing a range via the Asymmetric Double-Sided Two-Way Ranging formula (ADS-TWR). The 'asymmetric' refers to the ability to handle non-constant reply times from each tag. The flight time from a sensor to tag is given by (c.f. Fig. 9 present document):

$$T_{round} = (T_{round1} * T_{round2} - T_{reply1} * T_{reply2}) / (T_{round1} + T_{round2} + T_{reply1} + T_{reply2})$$

Where $T_{round1}$ is the round-trip time for a signal back to the hub and $T_{reply1}$ is the dead time on the tag waiting to reply once it hears from the hub, whereas $T_{reply2}$ is the reply time on the hub from the first exchange and $T_{round2}$ is the round-trip time from the tag's point of view. The heuristic being that the oscillator frequency differences (tag vs hub) wash out in this two-round trip exchange. Obviously, there will be another downlink from the tag to convey $T_{round2}$ to the hub.

In the present invention, it is also envisioned to determine the range, and thus ToA, via ADS-TWR. This technique can be applied even in situations where symmetric reply delays (such as with Symmetric Double-Sided Two-Way Ranging (SDS-TWR) are impossible or hard to accomplish. It has the further advantage of suppressing errors induced by transceiver clock drifts when signal reply delays are unequal, while maintaining or even surpassing the high precision of SDS-TWR. The number of back- and-forth signals can also be reduced in view of SDS-TWR, thus significantly lowering airtime and power consumption.

Fig. 1 depicts the disposition and communication of the sensors and tags and the processing of their signals.

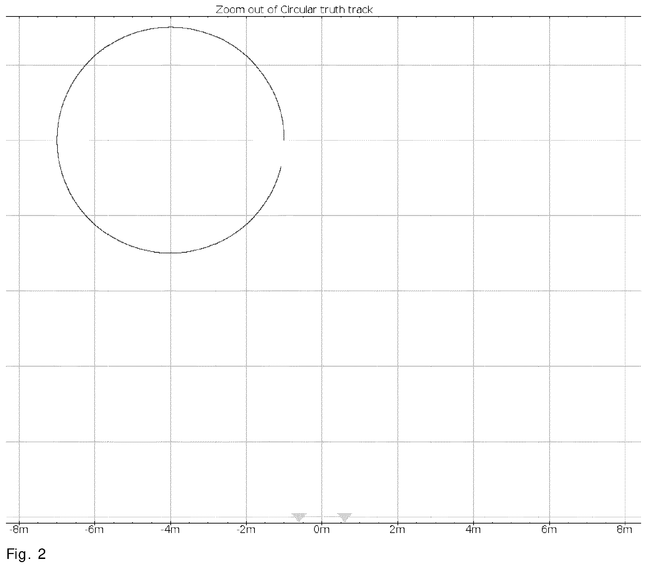

Fig. 2 is a zoom out of the circular truth track located left of the hub depicted on the centre bottom. The geometry related to being left of the hub makes the positioning much more challenging. In each of Fig. 2 - 8 the 'truth' track is represented by a perfect circle, with the more erratic being the simulated UKF filter.

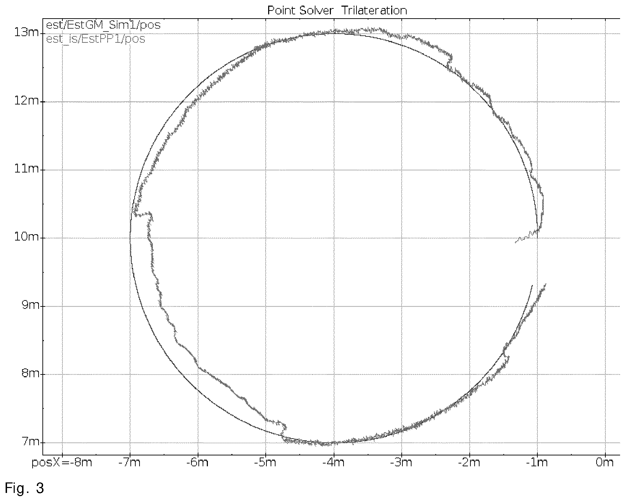

Fig. 3 is a simulation depicting the tracking of a tag moving in a circle radius 3 centre (-4, 10) where the perfect circle (blue) is the truth, the more erratic circle (green) is the UKF filter using delta-phase and ranges, and the more erratic circle (red) is the point solver via **trilateration** using the Hatch filter shadowing the UKF in case it needs to restart the UKF;

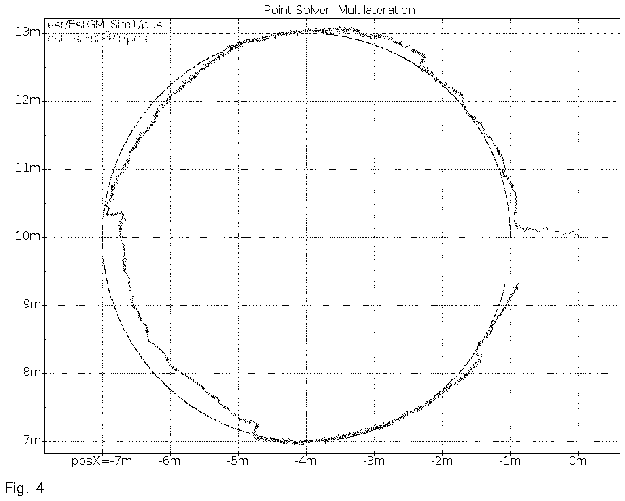

Fig. 4 is a simulation depicting the tracking of a tag moving in a circle radius 3 centre (-4, 10) where the perfect circle (blue) is the truth, the more erratic circle (green) is the UKF filter using delta-phase and ranges, and the more erratic circle (red) is the point solver via **multilateration** using the Hatch filter shadowing the UKF in case it needs to restart the UKF;

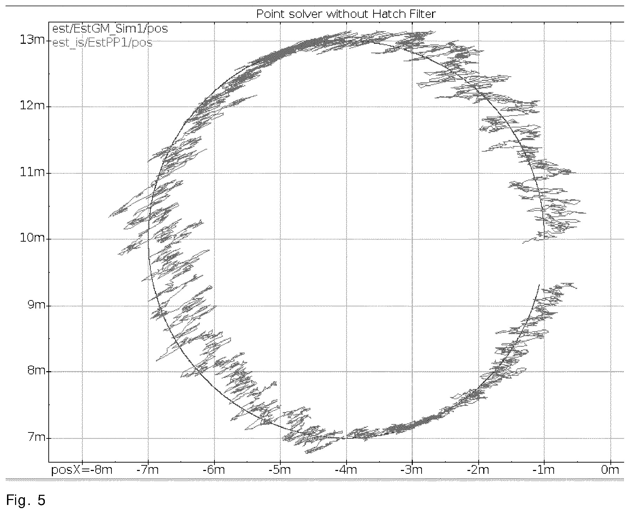

Fig. 5 is a simulation depicting the tracking of tag moving in the same circle of radius 3 and centre (-4, 10) but without the Hatch filter; the perfect circle (blue) is the true track, the more erratic circle (green) is the UKF in delta-phase and range mode and the more erratic circle (red) is the point-solver via trilateration **without** Hatch filtering. The result would be essentially the same via multilateration.

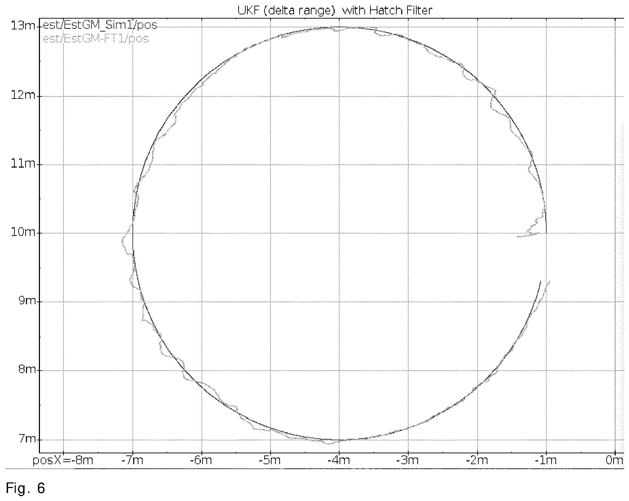

Fig. 6 is a simulation depicting the tracking of a tag moving in the same circle of radius 3 and centre (-4, 10) showing the UKF filter using range and delta-range **with** the Hatch filter (not delta-phase) as the more erratic circle (green) and true track as the perfect circle (blue).

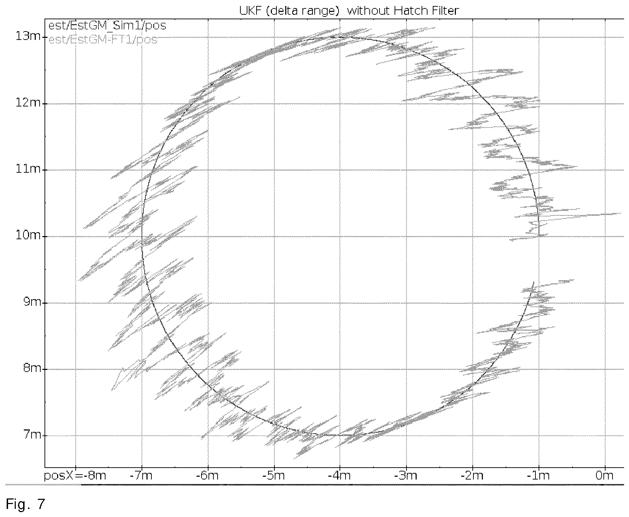

Fig. 7 is a simulation depicting the tracking of a tag moving in the same circle of radius 3 and centre (-4, 10) showing the UKF filter using range and delta-range **without** the Hatch filter as the more erratic circle (green) and true track as the perfect circle (blue).

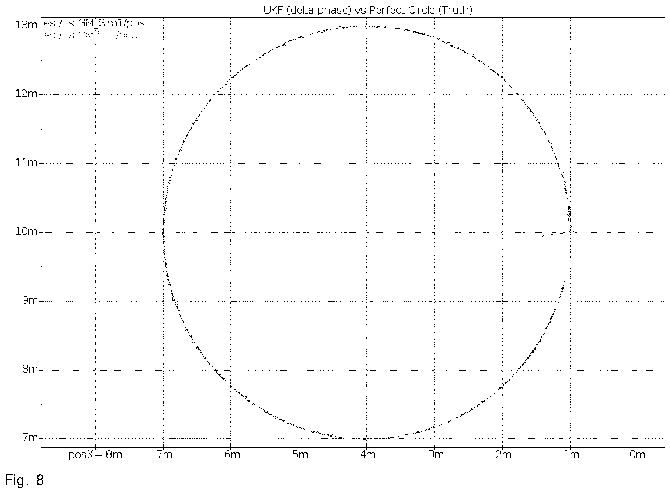

Fig. 8 is a simulation depicting (for comparison) the tracking of a tag moving in the same circle of radius 3 and centre (-4, 10) showing the UKF filter using range and delta-phase as the more erratic circle (green) and true track as the perfect circle (blue).

Fig. 9 depicts the timing diagram for an Asymmetric Double-Sided Two-Way Ranging session. This reduces by one message the overhead of Double-Sided Two Way Ranging and still improves accuracy over a simple 2 way ranging exchange.

Figures 2 through 8 pertain to a simulation of circular motion. In these three cases, the three sensors were disposed in an equilateral triangle (side 40 cm) on the hub, whose base was parallel to the ground at a height of 1 m. The plane defined by the sensors was normal to the y-axis (boresight). The simulations used a circle of radius of 3 m centred at (-4, 10, 1) relative to the hub (4 m left of boresight and 10 m in front of the hub, and at a height 1 m).

Figure 2 shows a top view of an incomplete circular track on which the tag was simulated to move, positioned as above. The sensor array is positioned at (0, 0, 1) with the centre of its base (specific positions of the sensors would be (-0.2, 0, 1); (0.2, 0, 1) and (0, 0, 1.35)).

Figure 3 then shows the circular track again (steady line) and the tag position obtained via a trilateration point-solver positioning method (shaky line), with a Hatch filter applied on the point-solver. Figure 4 does the same as Figure 3, but using multilateration instead of trilateration.

Figure 5 attempts the same as above, but without the use of a Hatch filter, making it clear how much the use of the Hatch filter improves the accuracy. The variations in Figure 5 in view of the actual track range up to almost 1 meter in different directions over substantial sections of the track, whereas the variations in Figures 3 and 4 are at most 25 cm, and substantially less for the greater part of the track.

Figure 6 and 7 show the same as Figures 3, 4 versus 5. Figure 6 shows the position detection using an Unscented Kalman Filter (UKF) applied on the range and range difference, with use of a Hatch filter, whereas Figure 7 does not use a Hatch filter. The differences between the two are even more extreme, with the variations using the Hatch filter barely register over 5 cm, while without the Hatch filter the variations run up to 1 meter, again in multiple directions.

Even more striking is the result seen in Figure 8, showing the UKF position detection applied on range and phase difference, again with Hatch filter. The detected positions essentially overlap with the 'true' track.

**Operation**

When starting using delta range measurements, the diagonal matrix $R_{meas}$ used for the observation noise covariance in a UKF must reflect the nature of the measurements used: delta range measurements will have a larger variance than delta phase measurements. Thus, when switching out range observables for phase observables, one must reflect this change in $R_{meas}$. In all other respects, the dimensions of the matrices remain the same, thus enabling one to use the same filter structure.

The Hatch filter on the delta-range measurements was adapted as follows:

$$d\theta_{ij}(n) = (\theta_i(n) - \theta_j(n)) - (\theta_i(n+1) - \theta_j(n+1)) \tag{1}$$

In the above, $\theta_i(n) - \theta_j(n)$ is the carrier phase measurement between a sensor i and sensor j (signal received by tag from sensor i, with sensor j receiving the response from the tag to said signal) at time n, representing the range therebetween. It handles phase rollovers (with $\lambda$ being the carrier wavelength) as follows:

while $(d\theta_{ij}(n) > \lambda/2)$

$$\{ d\theta_{ij}(n) \; -= \; \lambda; \} \tag{2}$$

or

while $(d\theta_{ij}(n) < -\lambda/2)$

$$\{ d\theta_{ij}(n) \; += \; \lambda; \} \tag{3}$$

And finally use $d\theta_{ij}(n)$ to smooth the range difference:

$$\hat{R}_{ij}(n) = (R_i(n) - R_j(n))/\tau + ((\tau - 1)/\tau) \; * (R_i(n-1) - R_j(n-1) + d\theta_{ij}(n)) \tag{4}$$

In the above, $R_i(n)$ represents the code phase measurement for sensor i at time n, while $\hat{R}_{ij}(n)$ represents the smoothed code phase measurement at time n.

Here, $\tau(0) = 1$

$\tau(n) = \tau(n-1) + 1$ if $n < \tau_{lim}$, and $\tau(n) = \tau_{lim}$ if $n \geq \tau_{lim}$,

where $\tau_{lim} = 200$ in the preferred embodiment.

That is, in the preferred embodiment the filter is declared to have converged after 200 samples. In the preferred embodiment, the filter samples ranges and phases at 100 Hz; at different sample rates and with different sensors the optimal minimum number of samples for convergence might be different.

The benefit is that the above produces an unambiguous delta-range observable with an RMS (root mean square error) lower than the unfiltered delta-range - by a factor of 3. Typically, the RMS of the unfiltered delta-range is ~ 4.5 cm; with the Hatch filter is < 1.5 cm and as little as 1 cm in some cases.

Decreasing the RMS of the delta-range is advantageous because this helps disambiguate the phase difference between sensors. Let $\psi_i$ be the full range from the tag to the $i^{th}$ sensor. In embodiments, the *full* single difference range between sensor i and j, $\Delta\psi_{ij}$ using the low-noise phase difference $\Delta\phi_{ij} = \phi_i - \phi_j$ (known modulo $\lambda$) can be calculated via,

$$\Delta\psi_{ij} = \Delta\phi_{ij} + \lambda \cdot \mathrm{round}((\Delta R_{ij} - \Delta\phi_{ij}) / \lambda) \tag{5}$$

(where $\Delta R_{ij} = R_i - R_j$ and $\lambda$ is the carrier wavelength).

It should be understood that the above methods can be applied to ADS-TWR range differences.

The initialization of the handoff to the UKF can use the new smoothed observables via trilateration (similar to techniques applied in GPS) or multilateration (similar to techniques applied in LORAN or cell tower OTDOA), or both. First, initialize $\hat{P}$ to an apriori (arbitrary) position in the hemisphere containing the tag.

Then for trilateration, iterate over the number of sensors, $num_{sensors}$ and create the vectors $dcos_i$, $dy_i$, and a matrix $M_{ij}$:

$$dcos_1 = (S_1 - \hat{P})/len_1, \quad len_1 = ||S_1 - \hat{P}||_2 \tag{6}$$

$$dcos_i = (S_i - \hat{P})/len_i, \quad len_i = ||S_i - \hat{P}||_2 \quad i=1, num_{sensors} \tag{7}$$

$dcos_i$ is the so called 'direction cosine' vector to the $i^{th}$ sensor from the tag

$$M_{ij} = dcos_1(j) + dcos_i(j) \quad j=1,2,3; \; I = 1, num_{sensors} \tag{8}$$

and

$$dy_i = meas_i - len_1 - len_j \qquad I = 1, num_{sensors} \qquad (9)$$

where the measurements in (9) are $meas_1 = R_3 - R_2$, $meas_2 = R_3 - R_1$, $meas_3 = R_2 - R_1$ and are all Hatch smoothed as in (4). For multilateration,

$$M_{ij} = dcos_i(k) - dcos_j(k); \; k = 1,2,3; \; \{i,j\} \in {}_nC_2 \qquad (10)$$

and

$$dy_k = meas_k - len_i + len_j \qquad k = 1, ..., |{}_nC_2| \qquad (11)$$

where $meas_k = R_i - R_j$ for $\{i,j\} \in {}_nC_2$, with nC2 being a combination of 2 out of n, (i.e. "the n choose 2 combinations") such that the index k in (11) corresponds to the pair $\{i,j\}$, and $meas_k$ has been Hatch smoothed as in (4).

For clarity, M will have either n (trilateration) or ${}_nC_2$ (multilateration) rows and 3 columns (for 3 sensors $|{}_3C_2| = 3$). One could use trilateration and multilateration together (with some weighting scheme) and **M** would have $n + {}_nC_2$ rows. If we let

$$dx = (M \; M^t)^{-1} \; M^t \; dy, \qquad (12)$$

Then iterate the above from equation (6) to (13) below:

$$\hat{P} = \hat{P} - dx \qquad until \; ||dx||_2 < \varepsilon \qquad (13)$$

For some $\varepsilon > 0$ to compute the final position $\hat{P}$.

In cases where multiple pairs of range differences and phase differences are available but where processor throughput is constrained, one may have to choose the best combination of pairs given the resulting PDOP (Position Dilution of Precision) from different pair choices. Additionally, if certain measurements are known to be contaminated by multipath artefacts, the offending observables can be dropped from the position calculations and their impact quantified via PDOP. To detect multipath, one can calculate the standard deviation of the phase difference between sensor pairs in some appropriate moving window (e.g., 10 to 50 samples). If the 'n' range differences are not independent and identically distributed, the PDOP matrix may be reconstructed as $(H^t H)^{-1} H^t E H (H^t H)^{-1}$ where **E** is the $n \times n$ covariance matrix corresponding to the range differences and **H** is the $n \times 3$ observation matrix (matrix of direction cosines) in the hub reference frame. The matrix **M** in 8) or 10) is the equivalent of **H** in the foregoing.

**Claims**

1. Method for determining the location of a tag comprising a tag antenna, relative to a plurality of sensors comprising a sensor antenna, said sensors being spaced apart from each other, comprising the steps of:

   a. Receiving at sensors of at least one pair of sensors of the plurality of sensors an ultrawideband (UWB) (tag-specific range signal and a tag-specific phase) signal from the tag antenna;
   b. Determining a time of arrival (ToA) and phase from the UWB signal for the sensors of said pair of sensors;
   c. Calculating a differential time of arrival (differential ToA) and a differential phase of said pair of sensors, from the determined ToA and phase of the sensors of said pair of sensors;
   d. Smoothing out the calculated differential ToA of the pair of sensors by means of a Hatch filter using the differential phase of said pair of sensors;
   e. Upon convergence of the Hatch filter, determining a location of the tag antenna relative to the sensors of said pair of sensors, using the smoothed calculated differential ToA.

2. The method according to claim 1, wherein steps a., b. and c. are furthermore performed for sensors of at least a second pair of the plurality of sensors, wherein the sensors of said pair of sensors and the sensors of said second pair of sensors are non-collinear, and wherein steps d. and e. are performed for one pair of said pair and said at least a second pair of sensors for which the differential phase and the differential ToA of said one pair exhibit a superior Position Dilution Of Precision (PDOP) and/or a superior Geometric Dilution Of Position (GDOP).

3. The method according to any of the preceding claims 1 or 2, wherein the location is determined by means of a Kalman filter, preferably an Unscented Kalman Filter (UKF).

4. The method according to any of the preceding claims 1 to 3, wherein during use, the tag is positioned within a radius of at most 120 m from the sensors, preferably at most 100 m, more preferably at most 80 m.

5. The method according to any of the preceding claims 1 to 4, wherein the UWB signal is transmitted with a centre frequency between 3.5 GHz and 9.5 GHz, preferably between 3.75 GHz and 7.5 GHz, and most preferably either between 4.0 GHz and 5.0 GHz or between 6.0 GHz and 7.0 GHz.

6. The method according to any of the preceding claims 1 to 5, wherein the Hatch filter is deemed to converge after at most 200 cycles, preferably at most 150 cycles, more preferably at most 100 cycles.

7. The method according to any of the preceding claims 1 to 6, wherein the location of the object is determined via multilateration and/or via trilateration.

8. The method according to any of the preceding claims 1 to 7, wherein a first of the sensors transmits an interrogation signal; wherein the tag, upon receipt of the interrogation signal, transmits the UWB signal from which the ToA is determined.

9. The method according to any of the preceding claims 1 to 8, wherein steps a., b. and c. are furthermore performed for sensors of at least a second pair of the plurality of sensors, wherein the sensors of said pair of sensors and the sensors of said second pair of sensors are non-collinear, and wherein steps d. and e. are performed for one pair of said pair and said at least a second pair of sensors for which the differential phase has the lowest standard deviation, thereby eliminating or reducing effect of multipath artefacts in measurements.

10. The method according to any one of the preceding claims 1 to 9, wherein the ToA is determined via Asymmetric Double-Sided Two-Way Ranging (ADS-TWR).

11. An ultrawideband (UWB) localization system for an object, comprising:

- a hub comprising a master processing unit (MPU), a receiver and at least two, preferably more, sensors, said sensors associated with the master processing unit;
- a tag associated with the object;
wherein the tag comprises an ultrawideband (UWB) component capable of sending an UWB signal; wherein the sensors are capable of receiving the UWB signal, and wherein the MPU determines a range and a phase from said received UWB signal for the sensor that received the UWB signal; wherein the MPU calculates a differential range for a pair of the sensors based on the determined ranges for the sensors in said pair of the sensors,
wherein the MPU is configured for smoothing out the calculated differential range for the pair of the sensors by means of a Hatch filter using differential phase for the pair of the sensors, said differential phase being based on the determined phase for the sensors in said pair of the sensors.

12. The UWB localization system according to the preceding claim 11, wherein the UWB component comprises a transponder capable of receiving UWB signals.

13. The UWB localization system according to any of the preceding claims 11 or 12, wherein the sensors are mutually spaced apart between 20 cm and 150 cm, preferably between 25 cm and 100 cm, more preferably 40 cm.

14. The UWB localization system according to any of the preceding claims 11 to 13, wherein the hub comprises at least 3 sensors, said sensors being positioned non-collinearly.

15. The UWB localization system according to any of the preceding claims 11 to 14, wherein the sensors are driven by at least one shared oscillator.

16. Use of the methodology according to any of the preceding claims 1 to 10, and/or of the system according to any of the preceding claims 11 to 15, for tracking the position of athletes wearing a tag during sport exercises and/or tracking the position of elderly and/or injured persons wearing a tag during physical exercises.

Fig. 1

Fig. 2

Fig. 3

Point Solver  Multilateration

Fig. 4

Fig. 5

Fig. 6

UKF (delta range) without Hatch Filter

Fig. 7

Fig. 8

Fig. 9

Europäisches
Patentamt

European
Patent Office

Office européen
des brevets

# EUROPEAN SEARCH REPORT

Application Number

EP 22 17 4150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/021206 A1 (HACH RAINER [DE] ET AL) 24 January 2013 (2013-01-24) | 1-9, 11-16 | INV. G01S5/02 |
| Y | * paragraph [0024] - paragraph [0027] * <br> * paragraph [0036] - paragraph [0050] * <br> * paragraph [0128] - paragraph [0139] * <br> * paragraph [0151] - paragraph [0153] * <br> * paragraph [0174] - paragraph [0180] * <br> * figures 1-7 * <br> * abstract * | 10 | G01S5/06 <br> G01S13/76 |
| | ----- | | |
| X | US 2018/136310 A1 (SHIBATA OSAMU [JP] ET AL) 17 May 2018 (2018-05-17) | 1-9, 11-16 | |
| Y | * paragraph [0008] - paragraph [0016] * <br> * paragraph [0023] - paragraph [0024] * <br> * paragraph [0042] - paragraph [0063] * <br> * paragraph [0084] - paragraph [0086] * <br> * figures 1-3 * <br> * abstract * | 10 | |
| | ----- | | |
| Y | WO 2022/027137 A1 (GEONAVO POSITIONING SYSTEMS INC [CA]) 10 February 2022 (2022-02-10) | 10 | TECHNICAL FIELDS SEARCHED (IPC) |
| A | * paragraph [0069] - paragraph [0071] * <br> * paragraph [0098] - paragraph [0105] * <br> * paragraph [0111] - paragraph [0113] * <br> * figures 1-20 * <br> * abstract * | 1-9, 11-16 | G01S |
| | ----- | | |
| A | US 2022/113372 A1 (DERBEZ ERIC [CA] ET AL) 14 April 2022 (2022-04-14) * the whole document * | 1-16 | |
| | ----- | | |
| | -/-- | | |

The present search report has been drawn up for all claims

| Place of search | Date of completion of the search | Examiner |
|---|---|---|
| Munich | 2 November 2022 | Galmiche, Aurélien |

EPO FORM 1503 03.82 (P04C01)

Europäisches
Patentamt

European
Patent Office

Office européen
des brevets

# EUROPEAN SEARCH REPORT

Application Number

**EP 22 17 4150**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MOHAMED R MAHFOUZ ET AL: "Investigation of High-Accuracy Indoor 3-D Positioning Using UWB Technology", IEEE TRANSACTIONS ON MICROWAVE THEORY AND TECHNIQUES, IEEE, USA, vol. 56, no. 6, 1 June 2008 (2008-06-01), pages 1316-1330, XP011214226, ISSN: 0018-9480 * the whole document * ----- | 1-16 | |

**TECHNICAL FIELDS SEARCHED      (IPC)**

The present search report has been drawn up for all claims

| Place of search | Date of completion of the search | Examiner |
|---|---|---|
| Munich | 2 November 2022 | Galmiche, Aurélien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 17 4150

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2022

| Patent document cited in search report | | Publication date | Patent family member(s) | | Publication date |
|---|---|---|---|---|---|
| US 2013021206 | A1 | 24-01-2013 | EP | 2525236 A1 | 21-11-2012 |
| | | | US | 2013021206 A1 | 24-01-2013 |
| | | | US | 2019072636 A1 | 07-03-2019 |
| | | | US | 2022011399 A1 | 13-01-2022 |
| US 2018136310 | A1 | 17-05-2018 | CN | 107850660 A | 27-03-2018 |
| | | | JP | 6540804 B2 | 10-07-2019 |
| | | | JP | WO2017014011 A1 | 05-04-2018 |
| | | | US | 2018136310 A1 | 17-05-2018 |
| | | | WO | 2017014011 A1 | 26-01-2017 |
| WO 2022027137 | A1 | 10-02-2022 | NONE | | |
| US 2022113372 | A1 | 14-04-2022 | CA | 3125587 A1 | 09-07-2020 |
| | | | EP | 3899583 A1 | 27-10-2021 |
| | | | US | 2022113372 A1 | 14-04-2022 |
| | | | WO | 2020141422 A1 | 09-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017079839 A, McMillan

**Non-patent literature cited in the description**

- **TEUNISSEN, P.J.G.** Least-squares estimation of the integer GPS ambiguities. *IAG General Meeting, Beijing, China,* 1993

- Unscented Kalman Filter for Nonlinear Estimation. **WAN, ERIC ; WAN ; VAN DER MERWE et al.** academic thesis. Oregon Graduate Institute of Science & Technology, 04 October 2000